# EUROPEAN PATENT SPECIFICATION

(11) **EP 1 729 149 B1**
(45) Date of publication and mention of the grant of the patent: **09.01.2013**
(21) Application number: 05011654.0
(22) Date of filing: 30.05.2005
(51) Int. Cl.: G01T 3/08

(54) **Solid state neutron detector system**
Festkörper-Neutronendetektorsystem
Système de détecteurs de neutrons à sémi-conducteur

(43) Date of publication of application: 06.12.2006
(73) Proprietor: Deutsches Elektronen-Synchrotron DESY, 22603 Hamburg (DE); Technical University of Lodz, Al. Politechniki 11 90-924 Lodz (PL)
(72) Inventor: Mukherjee, Bhaskar, D-22607 Hamburg (DE); Simrock, Stefan, D-22761 Hamburg (DE); Makowski, Dariusz, PL-95-200 Pabianice (PL); Grecki, Mariusz, PL-94-223 Lodz (PL)
(74) Representative: UEXKÜLL & STOLBERG

(56) References cited:
- WO-A-2004/073326
- US-A- 6 075 261
- US-E- R E35 908
- VYLET V: "Response matrix of an extended Bonner sphere system" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 476, no. 1-2, 1 January 2002 (2002-01-01), pages 26-30, XP004330255 ISSN: 0168-9002
- ING H ET AL: "Bubble detectors--a maturing technology" RADIATION MEASUREMENTS, ELSEVIER SCIENCES PUBLISHERS, BARKING, GB, vol. 27, no. 1, February 1997 (1997-02), pages 1-11, XP004062072 ISSN: 1350-4487

## Description

The present invention relates to a neutron detector system. Since neutrons are uncharged particles which have generally only few interaction with matter, it is complicated to detect neutrons in contrast to charged particles like electrons, alpha-particles or electromagnetic radiation.

Especially in case of high energy accelerators also neutron radiation is produced which can cause malfunctions of systems placed in the accelerator environment and can be detrimental to the electronic devices. Furthermore, neutron radiation produces damage in biological material which requires to monitor the neutron fluence in the accelerator environment also for safety reasons.

In case of neutrons, nuclear reactions such as ³He(n,p)³H and ¹⁰B(n,α)⁷Li can be employed for detection. The reaction product, either the alpha-particle or the proton, can be detected in a known manner, for example with a counter. In case that neutrons should be detected in an environment where also a strong gamma radiation background is present, counters have the disadvantage, that they are also sensitive to gamma radiation with the resulting problem that it is necessary to separate between events which are caused by neutrons and events induced by gamma rays.

A second problem with counters with a gas filling are dead time effects which occur when a neutron pulse with a high fluence hits the counter. In such a case, in the time period which is required to analyse a first event in the counter, a further neutron hitting the counter is not detected. Therefore, the measured fluence underestimates the real fluence occurring at the position of the counter.

In order to solve the problems of sensitivity to other particles than neutrons and of dead time effects, single event upsets (SEU) occurring in memory devices have been employed for neutron detection as disclosed for example in WO 2004/073326. In case that a neutron impinges upon a Si-based memory chip, this can lead to a bit-flip in one of the memory cells which in turn can be detected by comparing the initial state of the memory device and the state after neutron irradiation.

The SEUs are caused due to the Boron (B) with which the Si in the memory chip is usually doped. Therefore, the above mentioned nuclear reaction ¹⁰B(n,α)⁷Li can be initiated by an impinging neutron, since natural boron is composed of the isotopes ¹⁰B and ¹¹B. The resulting alpha-particle deposits its energy on a very short distance within the memory chip. These densely ionising alpha-particles travel within the device and hit the sensitive nodal points of the microelectronic building blocks of the memory chip resulting in the creation of SEU. Thus, already one neutron can be sufficient to cause a bit flip.

The advantage of the utilisation of SEUs for neutron detection is on the one hand that this effect is only sensitive to neutrons while especially gamma radiation does not lead to bit flips within the memory device. On the other hand, the number of bit flips is directly proportional to the neutron fluence with which the memory device has been irradiated. Therefore, the number of bit flips during a certain time period is a direct measure of the neutron fluence at the position of the memory device.

The number of bit flips within the memory device in relation to the neutron fluence depends on the reaction cross section for the ¹⁰B(n,α)⁷Li-reaction. This reaction cross section shows an energy dependence with a high cross section for neutrons with thermal energy. With increasing neutron energy the cross section decreases. The effect is that the probability for being detected as a bit flip within the memory device is for high energy neutrons reduced as compared to neutrons with thermal energy. But for a neutron detector which should measure the overall neutron fluence it is desirable to have a so called "flat" response with respect to the energy of the neutrons and being energy independent. Furthermore, also neutrons with energies above thermal energy should be detected efficiently since these neutrons cause strong damage within biological material.

The DE 43 44 955 C1 discloses already a neutron detector which comprises a centrally arranged counter which is surrounded by a sphere of moderator material. The moderator material comprises polyethylene which has large hydrogen content. Due to elastic scattering with the hydrogen nuclei, impinging neutrons loose a large amount of their kinetic energy during penetration of the moderator sphere and are thus "thermal-ised". After being moderated to thermal energy the neutrons can be detected with a higher probability within the counter. But even with the moderator sphere according to the DE 43 44 955 C1 it is not possible to achieve a flat and energy independent response of the neutron detector. A further disadvantage of a detector utilising a counter is that the gas pressure inside the counter is considerably high. This high pressured gas filling might pose a risk especially in an environment with changing temperature.

An improved Bonner sphere system is known from V. Vylet, "A response matrix of an extended Bonner sphere system", NIM in Physics Research, A 476 (2002), 26-30. In order to improve the energy range and energy resolution a system of interchangeable polyethylene and lead inserts formed by hemispherical shells is suggested such that a plurality of different detectors yields a versatile response matrix. However, the achieved response function is not flat and varies for different neutron energies. It is a further disadvantage that a complicated readout system is required to calculate the response function from the response matrix delivered by the plurality of detectors.

It is therefore the object of the present invention to provide a neutron detector which has a response to neutrons which essentially independent of the neutron energy.

The above object is achieved by a neutron detector system which is defined by the appended claim 1, comprising a semiconductor memory chip including a plurality of memory cells, a read-out device connected to the memory chip, and a moderator shell surrounding the memory chip for reducing the energy of impinging neutrons, characterised in that the wall thickness of the moderator shell is between 0,5 and 1,5 times the relaxation length for neutrons and wherein the material of the moderator shell comprises a mixture of polyethylene and lead.

As noted above, in the moderator material the scattering cross section for impinging neutrons is generally energy dependent which in turn leads to an energy dependence of the relaxation length. In order to determine the material thickness which corresponds to the required relaxation length neutrons have to be used with an energy distribution between 0,001 MeV and 20 MeV with Maxwellian shape having a maximum at 2 MeV. The relaxation length is then the thickness of the respective material which is necessary to reduce the fluence of neutrons having the above energy distribution by a factor of e⁻¹ (0,37). This required thickness of the respective material can either be determined experimentally or by means of a computer simulation. It has to be noted that this definition for the determination of the relaxation length is common in the field of neutron physics for calibration purposes.

The moderator material contains both polyethylene and lead. While polyethylene with its high hydrogen content is an efficient moderator for low energy neutrons, lead efficiently moderates high energy neutrons by means of inelastic scattering. Therefore, a mixture of these moderator materials results in a constant moderation over a large energy spectrum between 1 eV and 15 MeV. Preferably, the polyethylene content is between 60% by weight and 80% by weight, especially 70 % by weight, which leads to good results with regard to the response function of the detector system.

Furthermore, it has turned out that a neutron detector system with a moderator shell with a thickness between 0,5 and 1,5 times the relaxation length leads to a flat response at the memory chip at the center of the shell. Especially a thickness between 0,8 and 1,2 times the relaxation length has proven to give good results with regard to a constant detection response. Thus, the system according to the present invention has for neutrons with an energy between 1 eV and 15 MeV essentially the same probability for being detected.

In the system of the present invention, the read-out device is adapted to read periodically the bit pattern in the memory chip to count bit flips which might have occurred as a result of an impinging neutron.

The detector system according to the present invention has compared to the prior art the further advantages that it has a smaller weight and smaller dimensions and that it has lower production costs.

For the moderator material it has turned out that a thickness of the moderator shell between 8 cm and 12 cm, preferably between 9 cm and 11 cm, gives a flat response.

According to the invention, the shape of the moderator material can be spherical wherein a shell is still spherical in the sense of the present invention if the distance from the surface of the shell to the center of the shell does not vary more than 10% with regard to the respective maximum distance. The spherical shape in combination with the small size of the memory chip ensures that the response function of the detector system is nearly direction independent.

In order to have a compact detector system, in a preferred embodiment the memory chip and the read-out device are included in an integrated circuit. Furthermore, it is preferred that the read-out device is covered with a radiation absorbent material to protect the read-out electronics.

According to special aspect of the present invention which is regarded as being independent form the detector system, the absorbent material preferably comprises polyethylene, boron carbide (B₄C) and metallic cadmium. Furthermore, the composition of the absorbent material comprises between 60% and 70% by weight of polyethylene, preferably 65 %, between 25% and 35% by weight of boron carbide (B₄C), preferably 30%, and between 0% and 10% % by weight of metallic cadmium, preferably 5%. This material leads to an efficient shielding against thermal neutrons and can ensure in this special application that the read-out device is not damaged due to the neutron hitting the detector.

Additionally or alternatively to the shielding, it is preferred that the read-out device comprises a first microcontroller and a second microcontroller in order to have a redundant system. In this case the output of both microcontrollers can be compared by means of a comparator and if a deviation is determined it can be concluded that one of the microcontrollers is corrupted.

According to the invention, the read-out device may comprise a programmable logic device, in particular a Field Programmable Gate Array (FPGA) or a Complex Programmable Logic Device (CPLD). In this way, electronics are provided which can be flexibly used.

Furthermore, it is preferred that the read-out device is detachably connected to the memory chip. This allows that the memory chip surrounded by the moderator shell is temporarily positioned remote from the read-out device. After a certain period of time, the memory chip can be connected to the read-out device and the neutron fluence can be determined to which the memory chip was exposed.

In order to be able to calibrate the detector system in situ, it is preferred to provide a calibration device adjacent to the memory chip. Furthermore, the calibration device can comprise a bubble dosimeter from which it is known to have a flat response which is desirable for calibration purposes. Especially, a superheated emulsion dosimeter can be utilised. The bubble dosimeter can be read out by means of a camera, especially a digital camera, which is connected to a calibration read-out device adapted for an automated analysis of the output of the camera. Then it is possible that the calibration of the detector system is performed automatically.

In the following, preferred embodiments of the present invention are discussed referring to the accompanied drawings, in which
- Fig. 1: is a schematic diagram of a first embodiment of a detector system of the present invention;
- Fig. 2: is a graph showing the neutron energy dependence of the reaction cross section both for low-z and high-z materials;
- Fig. 3: is a schematic view of the read-out device included in a detector system of the present invention;
- Fig. 4: is a sectional side view of a first embodiment of a detector system of the present invention;
- Fig. 5: shows the geometry of a moderator shell of the first embodiment of the present invention; and
- Fig. 6: is a schematic diagram of a second embodiment of a detector system of the present invention arranged in proximity of a neutron source.

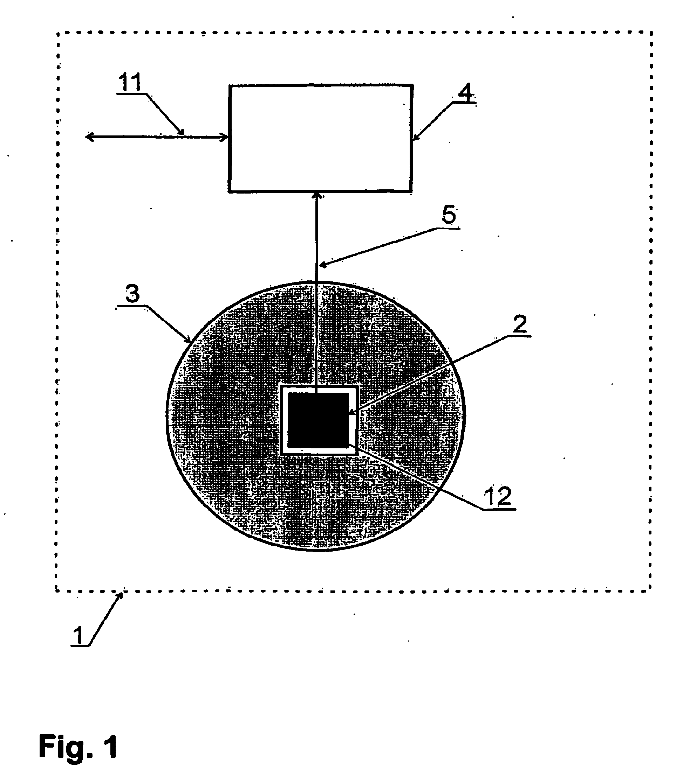

Fig. 1 shows a schematic diagram of a first preferred embodiment of a neutron detector system 1 according to the present invention. The detector system 1 comprises a semiconductor memory chip 2 which is preferably a static random access memory (SRAM). But is also possible to use instead a dynamic random access memory (DRAM). In any case, the memory chip 2 is neutron sensitive in the sense that an incoming neutron induces a nuclear reaction in the material of the chip 2 and therefore generates a single event upset (SEU). The memory chip 2 has a plurality of memory cells so that a predetermined bit-pattern can be stored within the memory chip 2.

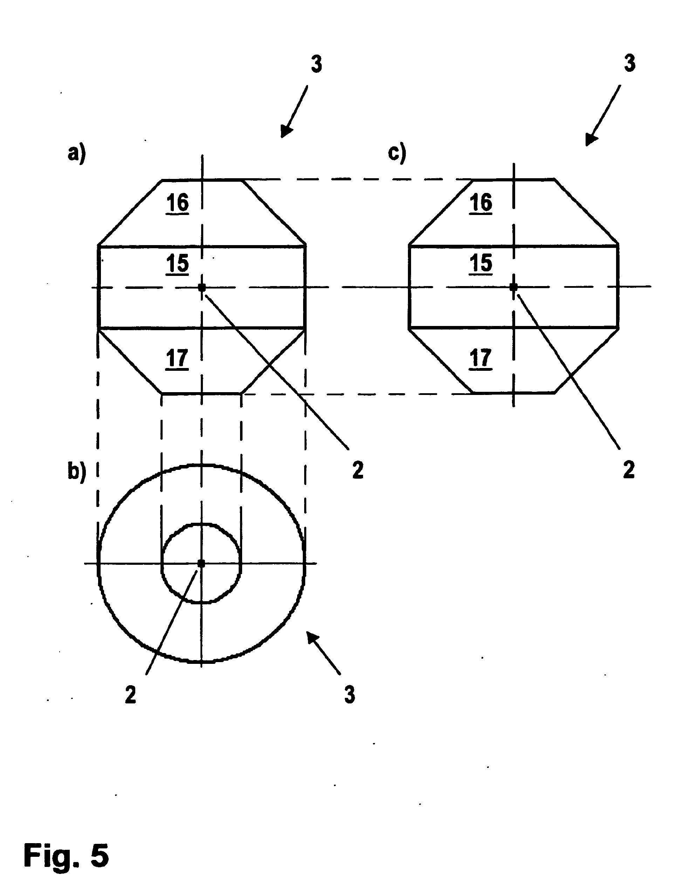

Further, the detector system 1 comprises a moderator shell 3, which surrounds the memory chip 2. The shape of the moderator shell 3 is described in detail below with regard to Fig. 5. The material of the moderator shell 3 which is regarded as being inventive independent of the detector system contains polyethylene and lead, and in the preferred embodiment the composition of the material is 70% by weight of polyethylene and 30% by weight of lead. This leads to a strongly reduced energy dependence of the efficiency with which the impinging neutrons are moderated within the moderator shell 3.

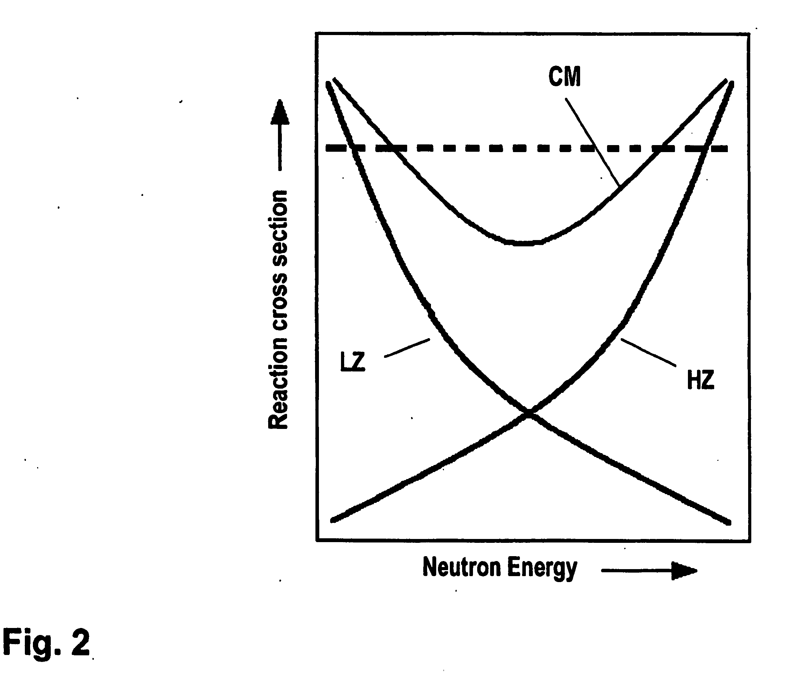

The efficiency with which neutrons are slowed down depends on the reaction cross section for scattering of the moderator material, which is shown in Fig. 2 as a function of the neutron energy. As can be seen, materials like polyethylene with low atomic number (low-z-materials indicated as "lz") have a high cross section at low neutron energies which then decreases to higher energies. In contrast, materials with high z ("hz") like lead have a high cross section at high neutron energies which is due inelastic scattering processes. Therefore, an appropriate composite material with a low-Z and a high-Z-material has a flat reaction cross section as is indicated by "cm".

The thickness of the spherical moderator shell 3 in radial direction with respect to the center where the memory chip 2 is located can vary between 0,5 and 1,5 times the relaxation length for neutrons. Preferably, the thickness is one relaxation length for neutrons. The relaxation length (also known as mean free path length) is the thickness of a moderator material which is required to reduce the neutron fluence by a factor of e⁻¹ (0,37). With the above mentioned composition of the material of the moderator shell 3 the thickness of the shell 3 is 10 cm, but can generally be between 8 cm and 12 cm. This results in a net weight of the moderator shell 3 of 7.5 Kg at maximum.

In order to have a direction independent response of the detector system 1, the memory chip 2 is arranged centrally within the moderator shell 3. Here, it is advantageous that the memory chip 2 has a small size in contrast to a counter or the like. Therefore, the memory chip 2 can be regarded as punctual at the center of the spherical shell 3.

The composition of the material of the moderator shell 3 and its geometry as well as the arrangement of the memory chip 2 provide a flat response of the detector system 1 for impinging neutrons. This means that the probability for a neutron of being detected by the system 1 of the present invention is essentially independent of the energy the neutrons have.

The memory chip 2 is connected to a read-out device 4 via connecting lines 5. The read-out device 4 is adapted to read periodically the bit.pattern, which is stored in the memory chip 2, in order to recognise neutron induced bit flips, so called single event upsets (SEUs).

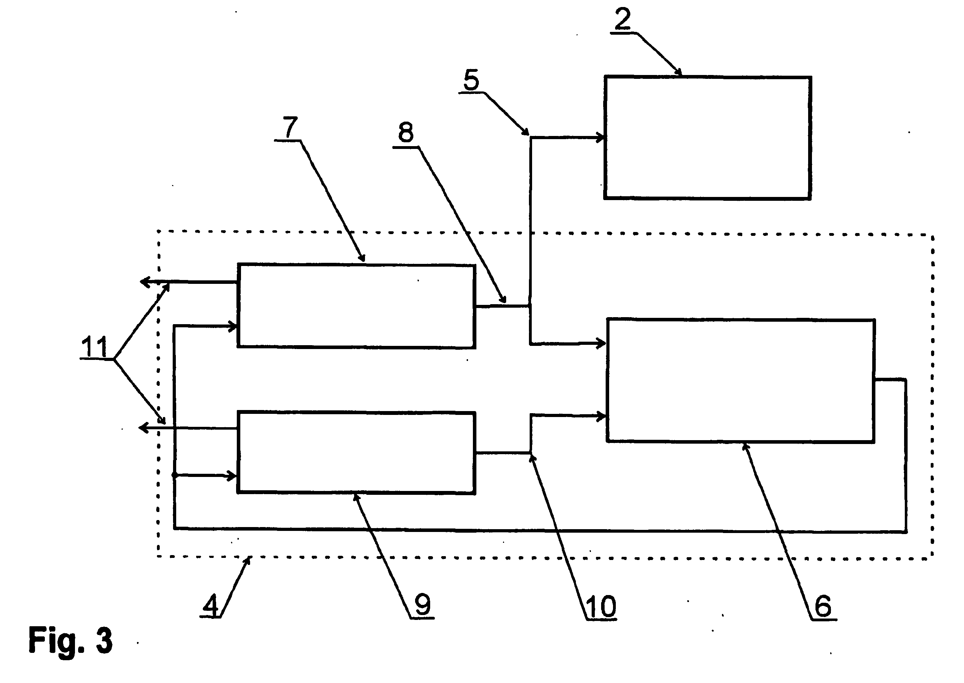

Since the neutrons can do harm also to the read-out device 4 it is adapted to be redundant. As can be seen in Fig. 3, the read-out device 4 of the first preferred embodiment comprises a data comparator 6. Furthermore, a first microcontroller 7 is connected to the memory chip via line 5 and a second microcontroller 9 is provided. Both the first and the second microcontroller 7, 9 are connected to the output line 11 and to comparator 6. In case that one of the microcontrollers 7, 9 fails, the microcontrollers 7, 9 have different output signals. This will be detected by the comparator 6 which delivers a signal indicating that one of the microcontrollers 7, 9 is corrupted and which is sent via line 11.

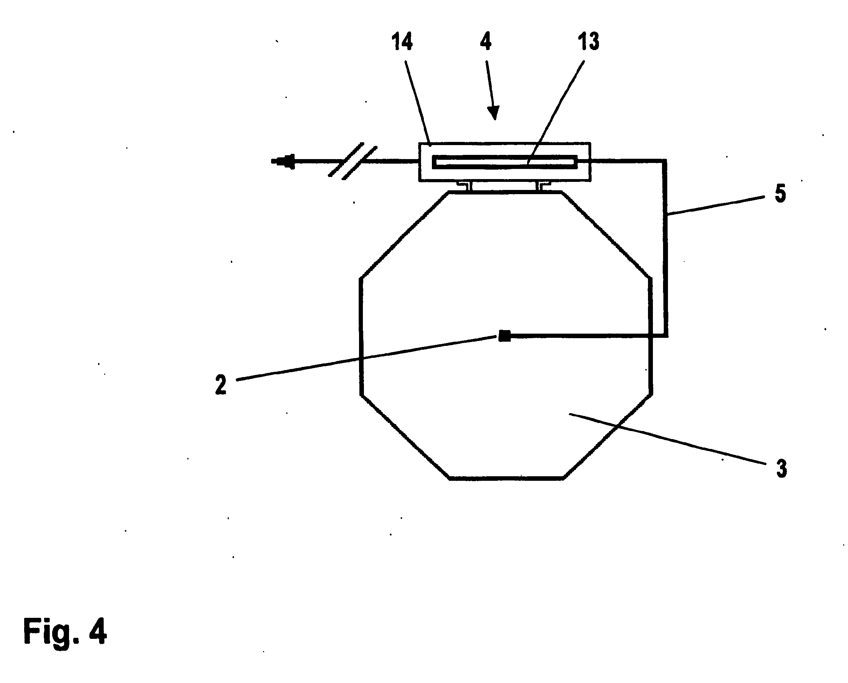

As shown in the sectional view of Fig. 4, in the first preferred embodiment of the detector system 1, a memory chip 2 with memory cells 12 is centrally arranged within the moderator shell 3. The memory chip 2 is connected to the read-out device 4 by line 5. The read-out device 4 comprises as an inner part the electronic circuit 13 and as an outer part a shielding 14 which is formed of a radiation absorbent material to protect the circuit 13.

According to an aspect of the present invention which independent from the detector system, the radiation absorbent material comprises polyethylene, boron carbide (B₄C) and metallic cadmium. This material selectively cut off low-energy (thermal) neutrons with a very high efficiency. In this connection it is preferred that the composition of the absorbent material comprises between 60% and 70% by weight of polyethylene, between 25% and 35% by weight of boron carbide (B₄C) and between 0% and 10% % by weight of metallic cadmium. In this embodiment, the absorbent material has the composition of 65% by weight of polyethylene, 30% by weight of boron carbide (B₄C) and 5% by weight of metallic cadmium and metallic cadmium is utilised for the mixture in the form grains with a diameter of 0,2 - 0,5 mm.

In Fig. 5, the geometry of the moderator shell 3 of the first embodiment is shown in detail. In this drawing parts a) and c) depict side views while part b) is a top view of the shell 3. As can be seen, the shell 3 with the memory chip 2 in the center has in the central part 15 a cylindrical shape. In the upper part 16 and the lower part 17, the surface is inclined with respect to the central part such that both parts 16, 17 have the shape of a truncated cone. While the moderator shell can have the shape of a sphere, an already essentially spherical shape like the preferred embodiment shown here is sufficient to ensure direction independent response of the detector system 1. Therefore, "spherical" in the sense of the present invention means that the distance from the memory chip 2 and the outer surface of the moderator shell 3 does not vary more than 10% with regard to the maximum distance.

Further, the design shown in Fig. 5 has the advantage that it can be more easily produced by machining as compared to a sphere while it still fulfils the condition of being essentially spherical in the sense of the present invention. This is in particular due to the small size of the memory chip 2 which can be regarded is being punctual.

Instead of separating the memory chip 2 and the read-out device 4 it is also possible to combine them in a single integrated circuit to reduce the size of the detector device. Furthermore, it is also possible that the memory chip 2 is detachably connected to the read-out device 4. This allows that the memory chip 2 surrounded by the moderator shell 3 is positioned remote from the read-out device 4. After being located in a radiation field for a certain period of time, the memory chip 2 can be connected to the read-out device 4 and the changes in the bit pattern are analysed to count the number of SEUs. In this way, the neutron fluence can be determined to which the memory chip 2 in the moderator shell 3 was exposed. Here, it is advantageous, if a non-volatile memory chip is used, to ensure that no accidental bit flips have been occurred.

Furthermore, the detector system 1 of the present invention is also suitable for the measurement of the neutron fluence in pulsed radiation fields, since dead time effects or pile up effects caused by a temporary high neutron flux can not occur in case of the present detector system 1.

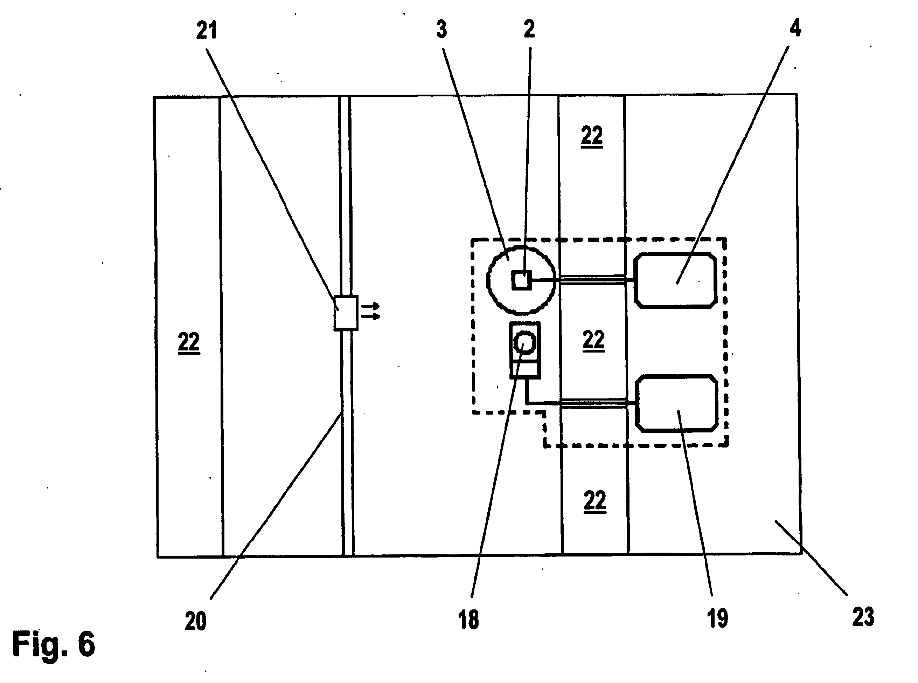

In Fig. 6, a second example of the present invention is shown wherein compared to the first example like numerals are used for like elements. In this case, besides the memory chip 2 and the read-out device 4, the detector system 1 further comprises a calibration device. The calibration device has a bubble dosimeter 18 as a neutron detection means which is arranged adjacent to the memory chip 2. The bubble dosimeter 18 is a superheated emulsion dosimeter. "Adjacent" means in this case that the neutron detection means is exposed essentially to the same neutron field as the memory chip 2 in order to guarantee a precise calibration. The bubble dosimeter 18 is enclosed by a neutron energy converter composed of a moderator material. Furthermore, a calibration read-out device 19 is provided for analysing the events in the bubble dosimeter 18.

The calibration read-out device 19 is connected to a camera which is directed to the bubble dosimeter 18. Preferably, the calibration device comprises a digital camera and the calibration read-out device 19 is adapted to analyse the output of the digital camera. This allows for an automated calibration of the neutron detection system 1, since the calibration read-out device 19 can automatically count the number of neutron induced traces in the bubble dosimeter 18. This number can then be compared to the number of SEUs in the memory chip 2 and a calibration can be accomplished.

In the example of Fig. 6, the detector system 1 is located in the near of an accelerator beam line 20. The beamline 20 has a region 21, in which neutrons are preferably created due to accidental beam losses. For protection, the beamline 20 is surrounded by a radiation shield 22 and in this preferred embodiment the read-out device 4 as well as the calibration read-out device 19 are located beyond the radiation shield 22 in region 23.

The system according to Fig. 6 can at first be calibrated by means of the calibration device. By counting both the events in the bubble dosimeter 18 and the SEUs in the memory chip 2 a precise calibration can be provided for further use. Thereafter, only the memory chip 2 is periodically read out by means of the read-out device 4 and the neutron fluence at the position of the memory chip 2 can thus be measured based on the in situ determined calibration.

## Claims

1. Neutron detector system comprising a semiconductor memory chip (2) including a plurality of memory cells (12), a read-out device (4) connected to the memory chip (2), and a moderator shell (3) surrounding the memory chip (2) for reducing the energy of impinging neutrons, **characterised in that** the wall thickness of the moderator shell (3) is between 0,5 and 1,5 times the relaxation length for neutrons and wherein the material of the moderator shell (3) comprises a mixture of polyethylene and lead.

2. Detector system according to claim 1, wherein the thickness of the moderator shell (3) varies between 0,8 and 1,2 times the relaxation length for neutrons.

3. Detector system according to claim 1, wherein the thickness of the moderator shell (3) varies between 0,9 and 1,1 times the relaxation length for neutrons.

4. Detector system according to claim 1 to 3, wherein the moderator shell (3) has a spherical shape.

5. Detector system according to claim 1 to 4, wherein the amount of polyethylene is between 60% by weight and 80% by weight, preferably 70% by weight.

6. Detector system according to claim 5, wherein the thickness of the moderator shell (3) is between 8 cm and 12 cm, preferably between 9 cm and 11 cm.

7. Neutron detector system according to claim 1 to 6, wherein the memory chip (2) and the read-out device (4) are included in an integrated circuit.

8. Neutron detector system according to claim 1 to 7, wherein the read-out device (4) is covered with a shielding (14) of radiation absorbent material.

9. Neutron detector system according to claim 8, wherein the radiation absorbent material comprises polyethylene, boron carbide (B₄C) and metallic cadmium.

10. Neutron detector system according to claim 9, wherein the radiation absorbent material comprises between 60% and 70% by weight of polyethylene, between 25% and 35% by weight of boron carbide (B₄C) and between 0% and 10% by weight of metallic cadmium.

11. Neutron detector system according to claim 10, wherein the radiation absorbent material comprises 65% by weight of polyethylene, 30% by weight of boron carbide (B₄C) and 5% by weight of metallic cadmium.

12. Neutron detector system according to claim 1 to 11, wherein the read-out device (4) comprises a first microcontroller (7) and a second microcontroller (9).

13. Neutron detector system according to claim 1 to 11, wherein the read-out device (4) comprises a programmable logic device, in particular a Field Programmable Gate Array (FPGA) or a Complex Programmable Logic Device (CPLD).

14. Neutron detector system according to claim 1 to 13, wherein the read-out device (4) is detachably connected to the memory chip (2).

15. Neutron detector system according to claim 1 to 14, further comprising a calibration device, which has a neutron detection means arranged adjacent to the memory chip (2).

16. Neutron detector system according to claim 15, wherein the neutron detection means comprises a bubble dosimeter (18).

17. Neutron detector system according to claim 16, wherein the calibration device comprises a camera for observing the bubble dosimeter (18).

18. Neutron detector system according to claim 17, wherein the calibration device comprises a digital camera which is connected to a calibration read-out device (19), the calibration read-out device (19) being adapted to analyse the output of the digital camera.

## Patentansprüche

1. Neutronendetektorsystem mit einem Halbleiterspeicherbaustein (2), der eine Vielzahl von Speicherzellen (12) umfasst, einer Ausleseeinrichtung (4), die mit dem Speicherbaustein (2) verbunden ist, und einer Moderatorschale (3), die den Speicherbaustein (2) zum Reduzieren der Energie von auftreffenden Neutronen umgibt, **dadurch gekennzeichnet, dass** die Wandstärke der Moderatorschale (3) zwischen dem 0,5 fachen und 1,5 fachen der Relaxationslänge für Neutronen beträgt, und wobei die Moderatorschale (3) eine Mischung aus Polyethylen und Blei aufweist.

2. Detektorsystem nach Anspruch 1, wobei die Dicke der Moderatorschale (3) zwischen dem 0,8fachen und 1,2 fachen der Relaxationslänge für Neutronen variiert.

3. Detektorsystem nach Anspruch 1, wobei die Dicke der Moderatorschale (3) zwischen dem 0,9fachen und 1,1 fachen der Relaxationslänge für Neutronen variiert.

4. Detektorsystem nach Anspruch 1 bis 3, wobei die Moderatorschale (3) eine sphärische Form hat.

5. Detektorsystem nach Anspruch 1 bis 4, wobei der Anteil von Polyethylen zwischen 60 Gewichts-% und 80 Gewichts-%, vorzugsweise 70 Gewichts-%, beträgt.

6. Detektorsystem nach Anspruch 5, wobei die Dicke der Moderatorschale (3) zwischen 8 cm und 12 cm, vorzugsweise zwischen 9 cm und 11 cm, liegt.

7. Neutronendetektorsystem nach Anspruch 1 bis 6, wobei der Speicherbaustein (2) und die Ausleseeinrichtung (4) in einer intregrierten Schaltung enthalten sind.

8. Neutronendetektorsystem nach Anspruch 1 bis 7, wobei die Ausleseeinrichtung (4) mit einer Abschirmung (14) aus strahlungsabsorbierendem Material abgedeckt ist.

9. Neutronendetektorsystem nach Anspruch 8, wobei das strahlungsabsorbierende Material Polyethylen, Borkarbid (B₄C) und metallisches Kadmium umfasst.

10. Neutronendetektorsystem nach Anspruch 9, wobei das strahlungsabsorbierende Material zwischen 60 und 70 Gewichts-% Polyethylen, zwischen 25 und 35 Gewichts-% Borkarbid (B₄C) und zwischen 0 und 10 Gewichts-% metallisches Kadmium aufweist.

11. Neutronendetektorsystem nach Anspruch 10, wobei das strahlungsabsorbierende Material 65 Gewichts-% Polyethylen, 30 Gewichts-% Borkarbid (B₄C) und 5 Gewichts-% metallisches Kadmium aufweist.

12. Neutronendetektorsystem nach Anspruch 1 bis 11, wobei die Ausleseeinrichtung (4) einen ersten Mikrocontroller (7) und einen zweiten Mikrocontroller (9) aufweist.

13. Neutronendetektorsystem nach Anspruch 1 bis 11, wobei die Ausleseeinrichtung (4) eine programmierbare Logikeinrichtung, insbesondere ein Field Programmable Gate Array (FPGA) oder ein Complex Programmable Logic Device (CPLD), aufweist.

14. Neutronendetektorsystem nach Anspruch 1 bis 13, wobei die Ausleseeinrichtung (4) lösbar mit dem Speicherbaustein (2) verbunden ist.

15. Neutronendetektorsystem nach Anspruch 1 bis 14, ferner mit einer Kalibriereinrichtung, die Neutronendetektormittel aufweist, die benachbart zu dem Speicherbaustein (2) angeordnet sind.

16. Neutronendetektorsystem nach Anspruch 15, wobei die Neutronendetektormittel ein Blasendosimeter (18) aufweisen.

17. Neutronendetektorsystem nach Anspruch 16, wobei die Kalibriereinrichtung eine Kamera zum Überwachen des Blasendosimeters (18) aufweist.

18. Neutronendetektorsystem nach Anspruch 17, wobei die Kalibriereinrichtung eine Digitalkamera aufweist, die mit einer Kalibrierausleseeinrichtung (19) verbunden ist, die angepasst ist, die Ausgabe der Digitalkamera zu analysieren.

## Revendications

1. Système détecteur de neutrons comprenant une puce de mémoire à semiconducteur (2) comprenant une pluralité de cellules de mémoire (12), un dispositif de lecture (4) connecté à la puce de mémoire (2), et une coque de modérateur (3) entourant la puce de mémoire (2) pour réduire l'énergie des neutrons incidents, **caractérisé en ce que** l'épaisseur de paroi de la coque de modérateur (3) vaut de 0,5 à 1,5 fois la longueur de relaxation pour les neutrons et dans lequel le matériau de la coque de modérateur (3) comprend un mélange de polyéthylène et de plomb.

2. Système détecteur selon la revendication 1, dans lequel l'épaisseur de la coque de modérateur (3) varie entre 0,8 et 1,2 fois la longueur de relaxation pour les neutrons.

3. Système détecteur selon la revendication 1, dans lequel l'épaisseur de la coque de modérateur (3) varie entre 0,9 et 1,1 fois la longueur de relaxation pour les neutrons.

4. Système détecteur selon les revendications 1 à 3, dans lequel la coque de modérateur (3) est de forme sphérique.

5. Système détecteur selon les revendications 1 à 4, dans lequel la quantité de polyéthylène est comprise entre 60 % en poids et 80 % en poids, de préférence 70 % en poids.

6. Système détecteur selon la revendication 5, dans lequel l'épaisseur de la coque de modérateur (3) vaut de 8 cm à 12 cm, de préférence de 9 cm à 11 cm.

7. Système détecteur de neutrons selon les revendications 1 à 6, dans lequel la puce de mémoire (2) et le dispositif de lecture (4) sont inclus dans un circuit intégré.

8. Système détecteur de neutrons selon les revendications 1 à 7, dans lequel le dispositif de lecture (4) est couvert d'un blindage (14) fait d'un matériau absorbant les rayonnements.

9. Système détecteur de neutrons selon la revendication 8, dans lequel le matériau absorbant les rayonnements comprend du polyéthylène, du carbure de bore (B₄C) et du cadmium métallique.

10. Système détecteur de neutrons selon la revendication 9, dans lequel le matériau absorbant les rayonnements comprend entre 60 % et 70 % en poids de polyéthylène, entre 25 % et 35 % en poids de carbure de bore (B₄C) et entre 0 % et 10 % en poids de cadmium métallique.

11. Système détecteur de neutrons selon la revendication 10, dans lequel le matériau absorbant les rayonnements comprend 65 % en poids de polyéthylène, 30 % en poids de carbure de bore (B₄C) et 5 % en poids de cadmium métallique.

12. Système détecteur de neutrons selon les revendications 1 à 11, dans lequel le dispositif de lecture (4) comprend un premier microcontrôleur (7) et un deuxième microcontrôleur (9).

13. Système détecteur de neutrons selon les revendications 1 à 11, dans lequel le dispositif de lecture (4) comprend un dispositif logique programmable, en particulier un réseau prédiffusé programmable (FPGA) ou un dispositif logique programmable complexe (CPLD).

14. Système détecteur de neutrons selon les revendications 1 à 13, dans lequel le dispositif de lecture (4) est connecté de manière détachable à la puce de mémoire (2).

15. Système détecteur de neutrons selon les revendications 1 à 14, comprenant en outre un dispositif d'étalonnage, qui comporte un moyen de détection de neutrons adjacent à la puce de mémoire (2).

16. Système détecteur de neutrons selon la revendication 15, dans lequel le moyen de détection de neutrons comprend un dosimètre à bulles (18).

17. Système détecteur de neutrons selon la revendication 16, dans lequel le dispositif d'étalonnage comprend une caméra destinée à observer le dosimètre à bulles (18).

18. Système détecteur de neutrons selon la revendication 17, dans lequel le dispositif d'étalonnage comprend une caméra numérique qui est connectée à un dispositif de lecture d'étalonnage (19), le dispositif de lecture d'étalonnage (19) étant adapté pour analyser la sortie de la caméra numérique.
